(19) Europäisches Patentamt
European Patent Office
Office européen des brevets

(11) **EP 2 549 116 B1**

(12) **EUROPÄISCHE PATENTSCHRIFT**

(45) Veröffentlichungstag und Bekanntmachung des Hinweises auf die Patenterteilung:
**16.10.2013 Patentblatt 2013/42**

(51) Int Cl.:
***F04D 25/08*** *(2006.01)* ***F04D 29/58*** *(2006.01)*

(21) Anmeldenummer: **11175071.7**

(22) Anmeldetag: **22.07.2011**

(54) **Axiallüfter mit zusätzlichem Strömungskanal**

Axial ventilator with additional flow channel

Ventilateur axial avec canal d'écoulement supplémentaire

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.01.2013 Patentblatt 2013/04**

(73) Patentinhaber: **ebm-papst Mulfingen GmbH & Co. KG
74673 Mulfingen (DE)**

(72) Erfinder:
• **Haaf, Oliver
74635 Kupferzell (DE)**
• **Haag, Christian
74673 Mulfingen (DE)**
• **Walter, Sven
97980 Rengershausen (DE)**

(74) Vertreter: **Patentanwälte
Dr. Solf & Zapf
Candidplatz 15
81543 München (DE)**

(56) Entgegenhaltungen:
**EP-A1- 0 992 692 EP-A2- 1 050 682
FR-A1- 2 433 846 JP-A- 2003 166 498
US-A1- 2010 158 713**

EP 2 549 116 B1

## Beschreibung

Die vorliegende Erfindung betrifft einen Axiallüfter, bestehend aus einem innenliegenden Elektromotor und einem mit diesem drehfest verbundenen Lüfterrad mit mehreren vom Elektromotor weg nach außen verlaufenden Radschaufeln mit einer Schaufellänge sowie insbesondere mit einem das Lüfterrad umfangsgemäß umgebenden Lüftergehäuse, das über mindestens zwei vom Motor nach außen zum Lüftergehäuse verlaufende Haltestreben mit dem Motor verbunden ist, sowie mit einem in Strömungsrichtung hinter dem Lüfterrad am Motor ausgebildeten Motorgehäuse, insbesondere zur Aufnahme einer Motorelektronik.

Derartige Axiallüfter sind allgemein bekannt. Bei diesen Axiallüftern erfolgt mit zunehmendem Gegendruck und mit zunehmender Motorbelastung eine Ablösung der Strömung des Strömungsmediums vom Nabenbereich, so dass sich das Problem ergibt, dass im kritischen Einsatzpunkt eine im Motorgehäuse befindliche Elektronik schlecht gekühlt wird, da das durch den Axiallüfter strömende Strömungsmedium das Motorgehäuse schlecht anströmt. Erschwerend kommt oftmals hinzu, dass zwischen dem Lüfterrad und den Haltestreben ein Schutzgitter angeordnet ist, und die Schutzgitteraufhängung hierzu mit einem großen Befestigungsflansch versehen ist. Durch diesen Befestigungsflansch wird die Anströmung des Motorgehäuses weiterhin verschlechtert.

Aus der EP 0 992 692 A1 ist ein Axiallüfter bekannt, der aus einem innenliegenden Elektromotor und einem mit diesem drehfest verbundenen Lüfterrad mit mehreren vom Elektromotor nach außen verlaufenden Radschaufeln mit einer Schaufellänge sowie mit einem das Lüfterrad umfangsgemäß umgebenen Lüftergehäuse bekannt.

Dieses Lüftergehäuse ist über mehrere vom Motor nach außen zum Lüftergehäuse verlaufenden Haltestreben mit dem Motor verbunden. Am Motor ist in Strömungsrichtung des Strömungsmediums hinter dem Lüfterrad ein Strömungskanal mit einer entgegen der Strömungsrichtung ausgerichteten Einströmöffnung und einer Ausströmöffnung derart befestigt, dass die Einströmöffnung gegenüber der Ausströmöffnung radial nach außen versetzt angeordnet ist, wobei die Einströmöffnung im Endbereich einer Haltestrebe ausgebildet ist. Hierbei ist der Strömungskanal derart mit seiner Ausströmöffnung angeordnet, dass diese zum Motor selbst ausgerichtet ist, so dass ein Anblasen des Motors in axialer Richtung erfolgt.

Der vorliegenden Erfindung liegt die Aufgabe zu Grunde, einen bekannten Axiallüfter derart auszugestalten, dass die Anströmung des Motorgehäuses und damit dessen Kühlung verbessert wird.

Erfindungsgemäß wird dies durch einen Axiallüfter erreicht, der aus einem innenliegenden Elektromotor und einem mit diesem drehfest verbundenen Lüfterrad mit mehreren vom Elektromotor nach außen verlaufenden Radschaufeln und einer Schaufellänge sowie insbesondere mit einem das Lüfterrad umfangsgemäß umgebenden Lüftergehäuse besteht, das über mindestens zwei vom Motor nach außen zum Lüftergehäuse verlaufende Haltestreben mit dem Motor verbunden ist, wobei am Motor in Strömungsrichtung des Strömungsmediums hinter dem Lüfterrad ein Strömungskanal mit einer entgegen der Strömungsrichtung ausgerichteten Einströmöffnung und einer Ausströmöffnung befestigt ist, so dass die Einströmöffnung gegenüber der Ausströmöffnung nach außen versetzt angeordnet ist, wobei in Strömungsrichtung hinter dem Lüfterrad am Motor ein Motorgehäuse zur Aufnahme einer Motorelektronik ausgebildet ist und wobei die Ausströmöffnung in Richtung auf das Motorgehäuse derart ausgerichtet ist, dass ein aus der Ausströmöffnung austretender Luftstrom auf das Motorgehäuse geleitet wird und die Ausströmöffnung einen Öffnungsspalt bildet, der über einen Teilumfang des Motorgehäuses sich erstreckt und die Mitte der Einströmöffnung mindestens in einem radialen Abstand zum Umfang einer Motornabe liegt, der ein Drittel bis zwei Drittelder Schaufellänge beträgt, wobei gilt L= (D1- D2) / 2 und D2 der Außendurchmesser der Motornabe und D1 der Durchmesser des Umkreises um ein radiales äußeres Ende der Radschaufeln ist.

Es kann zweckmäßig sein, wenn der Strömungskanal in radialer Richtung gradlinig verläuft oder der Strömungskanal derart schräg oder bogenförmig ausgebildet ist, dass die Einströmöffnung gegenüber der Ausströmöffnung radial und umfangsgemäß versetzt angeordnet ist. Die Erfindung basiert auf der Erkenntnis, dass über die Druckdifferenz zwischen der Einströmöffnung in dem Strömungskanal und der Ausströmöffnung sich eine Anströmgeschwindigkeit des Strömungsmediums aus dem Strömungskanal am Motorgehäuse ergibt, welche den Wärmeübergang im Vergleich zur natürlichen Konvektion deutlich erhöht. Denn mit größer werdendem Radius des Lüfterrades nimmt die Umfangsgeschwindigkeit zu, wodurch ein größerer Volumenstrom in die Einströmöffnung einströmen kann. Bei kleinen Volumenströmen kann die Einströmöffnung in Richtung auf das Motorgehäuse wandern, d. h. hierbei sind dann geringere Abstände der Einströmöffnung von der Motornabe realisierbar.

Erfindungsgemäß kann der Strömungskanal als separates Bauteil ausgebildet sein, wobei er außen auf der jeweiligen Haltestrebe befestigt sein kann, oder aber ein erfindungsgemäßer Strömungskanal kann in die jeweilige Haltestrebe auch integriert sein. Eine Befestigung des Strömungskanal kann beispielsweise durch Einclipsen erfolgen oder aber auch durch Anbinden mit geeigneten Befestigungsmitteln. Alternativ kann der Strömungskanal auch unmittelbar am Motorgehäuse bzw. einem Befestigungsflansch des Motorgehäuses befestigt sein.

Vorteilhafte Ausführungsformen der Erfindung sind in den Unteransprüchen enthalten und werden an Hand der beiliegenden Zeichnungen näher erläutert. Es zeigen:

Fig. 1 eine perspektivische Ansicht eines erfindungsgemäßen Axiallüfters,

Fig. 2 einen Teil-Schnitt entlang der Schnittlinie II-II in Fig. 1,

Fig. 3 eine perspektivische Ansicht eines erfindungsgemäßen Strömungskanals,

Fig. 3a einen Schnitt entlang der Schnittlinie IIIa-IIIa in Fig. 3,

Fig. 4 eine Ansicht gemäß dem Pfeil IV in Fig. 3,

Fig. 5 eine Ansicht eines erfindungsgemäßen Axiallüfters in alternativer Ausgestaltung,

Fig. 6 eine Ansicht eines erfindungsgemäßen Strömungskanals in einer alternativen Ausführungsform,

Fig. 7 einen Schnitt entlang der Schnittlinie VII-VII in Fig. 6,

Fig. 8 eine Ansicht auf einen erfindungsgemäßen Strömungskanal gemäß Fig. 6 in Pfeilrichtung VIII und

Fig. 9 eine Teil-Ansicht eines erfindungsgemäßen Axiallüfters unter Verwendung eines Strömungskanals gemäß Fig. 6,

Fig. 10 eine Ansicht eines erfindungsgemäßen Axiallüfters in einer weiteren alternativen Ausführungsform.

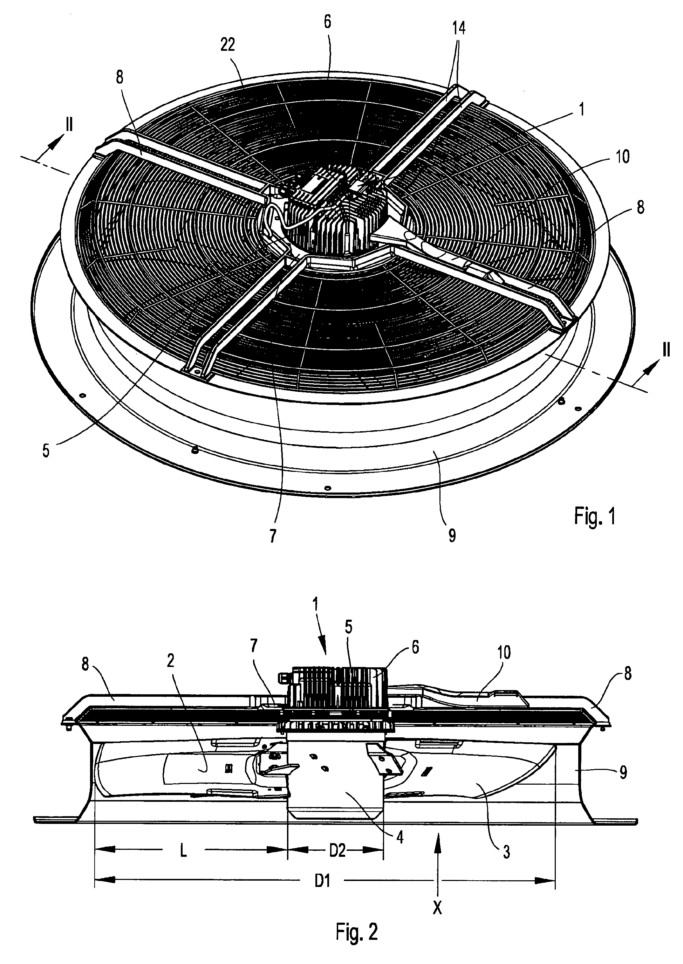

In den Fig. 1 bis 10 sind gleiche Teile bzw. funktionsgleiche Teil mit denselben Bezugszeichen gekennzeichnet. Sofern bestimmte beschriebene und/oder aus den Zeichnungen entnehmbare Merkmale des erfindungsgemäßen Axiallüfters oder seiner Bestandteile nur im Zusammenhang mit einem Ausführungsbeispiel beschrieben sind, sind diese aber auch gemäß der Erfindung unabhängig von diesem Ausführungsbeispiel als Einzelmerkmal oder aber auch in Kombination mit anderen Merkmalen der einzelnen Ausführungsbeispiele wesentlich und werden als zur Erfindung gehörig beansprucht.

Wie aus Fig. 1 zu entnehmen ist, besteht ein erfindungsgemäßer Axiallüfter aus einem innenliegenden Motor 1, insbesondere einem Elektromotor. Mit diesem Motor 1 ist ein Lüfterrad 2 drehfest verbunden. Das Lüfterrad 2 besitzt mehrere nach außen verlaufende Radschaufeln 3 mit einer bestimmten Länge L, gemessen von ihrem inneren Fuß, mit dem sie am Motor 1 befestigt sind, bis zu ihrer Außenkante. Im dargestellten Ausführungsbeispiel ist der Elektromotor 1 als Außenläufermotor ausgebildet und besitzt eine topfförmige Motornabe 4, die mit einer Rotorwelle fest verbunden ist. Am äußeren Umfang der Motornabe 4 sind die Radschaufeln 3 befestigt. Im Übrigen ist der dargestellte Motor in bekannte Weise ausgestaltet. In Strömungsrichtung X eines strömenden Mediums hinter den Radschaufeln 3 besitzt der Motor 1 ein Motorgehäuse 5, in dem die Motorsteuerung mit ihrer Motorelektronik angeordnet ist. Dieses Motorgehäuse 5 weist zweckmäßigerweise an seiner Außenseite eine Kühlstruktur 6 auf, die aus einzelnen Rippen gebildet ist. In Strömungsrichtung X gesehen, am Ende der Motornabe 4 und zu Beginn des Motorgehäuses 5, weist das Motorgehäuse 5 einen ringförmigen Befestigungsflansch 7 auf, an dem Haltestreben 8 befestigt werden, die zur endseitigen Befestigung eines Lüftergehäuses 9 dienen, das das Lüfterrad 2 umfangsgemäß einschließt. Erfindungsgemäß ist am Motor 1 mittelbar oder unmittelbar mindestens ein Strömungskanal 10 mit einer Einströmöffnung 12 an einem Ende und einer Ausströmöffnung 13 am anderen Ende in Strömungsrichtung X des Strömungsmediums hinter dem Lüfterrad 2 derart befestigt, das der Strömungskanal 10 sich ausgehend von dem Motorgehäuse 5 radial geradlinig in Richtung auf das Lüftergehäuse 9 bzw. geradlinig radial nach außen erstreckt, wobei die Ausströmöffnung 13 sich in der Nähe des Motorgehäuses 5 befindet und diesem derart zugekehrt ist, dass der aus der Ausströmöffnung 13 austretende Luftstrom auf das Motorgehäuse 5 gelenkt wird, und die Mitte der Einströmöffnung 12 mindestens in einem Abstand vom Umfang der Motornabe 4 liegt, der ein Drittel der Länge L der Radschaufeln 3 beträgt, wobei

$$L = (D1-D2)/2$$

beträgt, und D2 der Außendurchmesser der Motornabe 4 ist und D1 der Durchmesser eines Umkreises um das äußere Ende der Radschaufeln 3 ist. Hierdurch wird berücksichtigt, dass die Radschaufeln 3 z. B. gekrümmt ausgebildet und/oder mit einer geschwungenen Außenkante ausgeführt sein können. Durch den erfindungsgemäßen Strömungskanal 10 wird ein Kühlkanal definiert, durch den die Austrittsluft des Axiallüfters an den äußeren Umfang des Motorgehäuses 5 geleitet wird und bedingt durch die Druckdifferenz zwischen Eintrittsseite und der Austrittsseite des Strömungskanals 10 ergibt sich eine Anströmgeschwindigkeit im Bereich des Motorgehäuses 5, welche den Wärmeübergang im Vergleich zur natürlichen Konvektion deutlich erhöht.

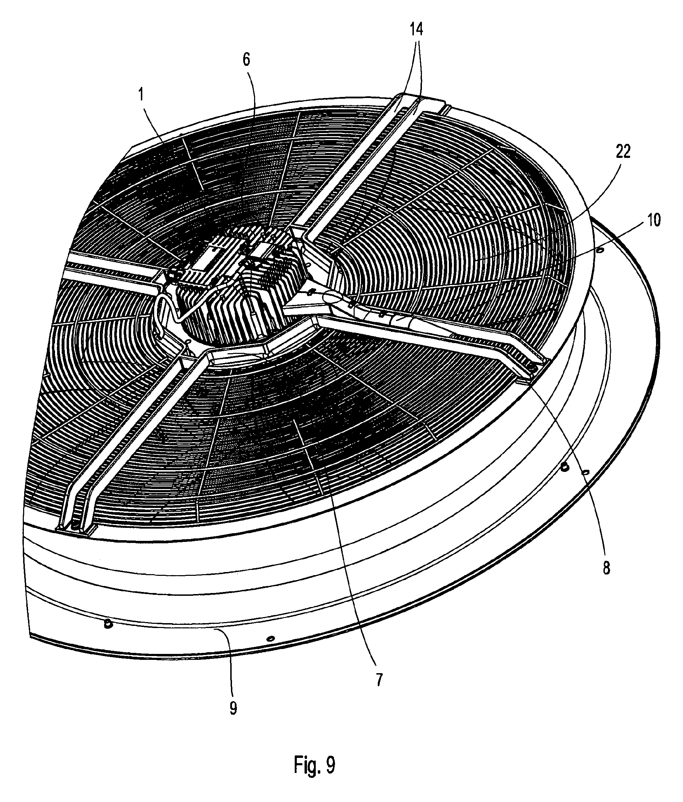

Erfindungsgemäß kann der Strömungskanal 10 z. B. in eine der Streben 8 integriert sein, so dass die Strebe selbst als Strömungskanal 10 ausgebildet ist. Im dargestellten Ausführungsbeispiel ist der Strömungskanal 10 rohrförmig als Zusatzteil ausgebildet. Zweckmäßigerweise ist die Einströmöffnung 12 derart ausgebildet, dass sie entgegen der Strömungsrichtung X ausgerichtet ist, so dass der vollständige Öffnungsquerschnitt für die durch den Axiallüfter strömende Luft bzw. durch das den Axiallüfter strömende Medium zur Verfügung steht. Erfindungsgemäß bildet die Ausströmöffnung 13 einen Öffnungsspalt, der sich über einen Teilumfang des Motorgehäuses 5 erstreckt, wie dies in den gezeigten Ausführungsbeispielen des erfindungsgemäßen Strömungskanals 10 dargestellt ist, so dass sich eine bogenförmige Öffnungskontur der Ausströmöffnung 13 ergibt, wobei der Bogenradius dem Krümmungsradius des Motorgehäuses 5 angepasst ist. Dies ist insbesondere beispielsweise aus Fig. 1 und 9 zu erkennen.

Wie in den Fig. 1 und 2 dargestellt ist, ist der erfindungsgemäße Strömungskanal 10 als Zusatzbauteil an einer der Haltestreben 8 befestigt. Hierbei sind die Haltestreben 8 aus zwei parallel verlaufenden Stegen 14 ausgebildet, zwischen denen der Strömungskanal 10 eingesetzt ist und z. B. durch eine Formschlussverbindung, insbesondere eine Clipverbindung befestigt ist. Der Strömungskanal 10 ist zweckmäßigerweise rohrförmig einteilig oder mehrteilig hergestellt. Im dargestellten Ausführungsbeispiel besitzt der Strömungskanal 10 einen rechteckigen Querschnitt und besitzt eine Frontwand 15, eine Rückwand 16 und zwei diese beiden verbindende Seitenwände 17. Es muss aber kein exakt rechteckiger Querschnitt sein. Es kann auch ein quadratischer oder trapezförmiger Querschnitt vorhanden sein. Es können auch Strömungskanalabschnitte mit unterschiedlicher Querschnittsform vorhanden sein.

In seinem die Ausströmöffnung 13 aufweisenden Endbereich weist der Strömungskanal 10 einen sich zur Ausströmöffnung 13 erweiternden Ausström-Trichterabschnitt 18 auf. Der die Ausströmöffnung 13 aufweisende Endabschnitt ist gegenüber dem übrigen Abschnitt des Strömungskanals 10 derart abgekröpft, dass er im befestigten Zustand oberhalb bzw. außerhalb der Haltestrebe 8 angeordnet ist, wohingegen der übrige Abschnitt des Strömungskanals 10 versenkt in der Haltestrebe 8, insbesondere zwischen den Stegen 14 verläuft. Wie weiterhin zu erkennen ist, kann es zweckmäßig sein, im Bereich der Einströmöffnung 12 den Rückwandabschnitt 19 zusammen mit einer Seitenwand 17 so auszugestalten, dass eine Zusatzöffnung 20 ausgebildet wird. Die Zusatzöffnung 20 erstreckt sich in die Seitenwand 17 hinein. Hierbei ist die Zusatzöffnung 20 auf der Seite des Strömungskanals 10 angeordnet, die in Drehrichtung der Radschaufeln 3 betrachtet von den Schaufelvorderkanten zuerst überstrichen wird. Der Rückwandabschnitt 19 besitzt oberhalb der Zusatzöffnung 20 einen Verlängerungsabschnitt 19a, der zur Umleitung der durch den Axiallüfter strömenden Luft in der Zusatzöffnung 20 dient. Hierbei ist der Verlängerungsabschnitt 19a sowie der Rückwandabschnitt 19 derart angeordnet und geformt, dass sich möglichst geringe Verwirbelungen in der Strömung ergeben, um Strömungsverluste und unerwünschte Strömungsgeräusche zu vermeiden.

Durch diese Zusatzöffnung 20 wird der wirksame Einströmquerschnitt vergrößert. Der Strömungskanal 10 besitzt eine endseitige Stirnwand 21, die abgeschrägt in Richtung auf das gegenüberliegende Ende ausgebildet ist, wodurch eine innere schräge Anströmfläche entsteht, die das Einströmverhalten innerhalb des Strömungskanals 10 verbessert. Im dargestellten Beispiel ist ein Schutzgitter 22 zwischen dem Lüfterrad 2 und den Haltestreben 8 angeordnet, das zwischen dem Befestigungsflansch 7 und dem Gehäuse 5 befestigt ist.

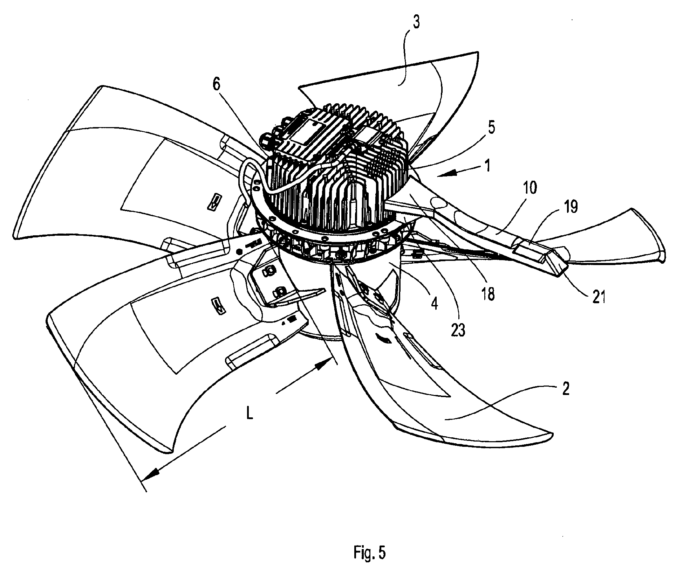

In Fig. 5 ist eine Ausbildung eines erfindungsgemäßen Axiallüfters dargestellt, bei dem kein Lüftergehäuse 9 vorhanden ist und bei dem somit auch Haltestreben 8 fehlen. Bei einer derartigen Ausführungsform ist der Strömungskanal 10 über einen Befestigungsansatz 23 an seiner Rückwand im Bereich der Ausströmöffnung 13 an den ringförmigen Befestigungsflansch 7 unmittelbar angeschraubt oder angeclipst und erstreckt sich vom Motor 1 radial nach außen.

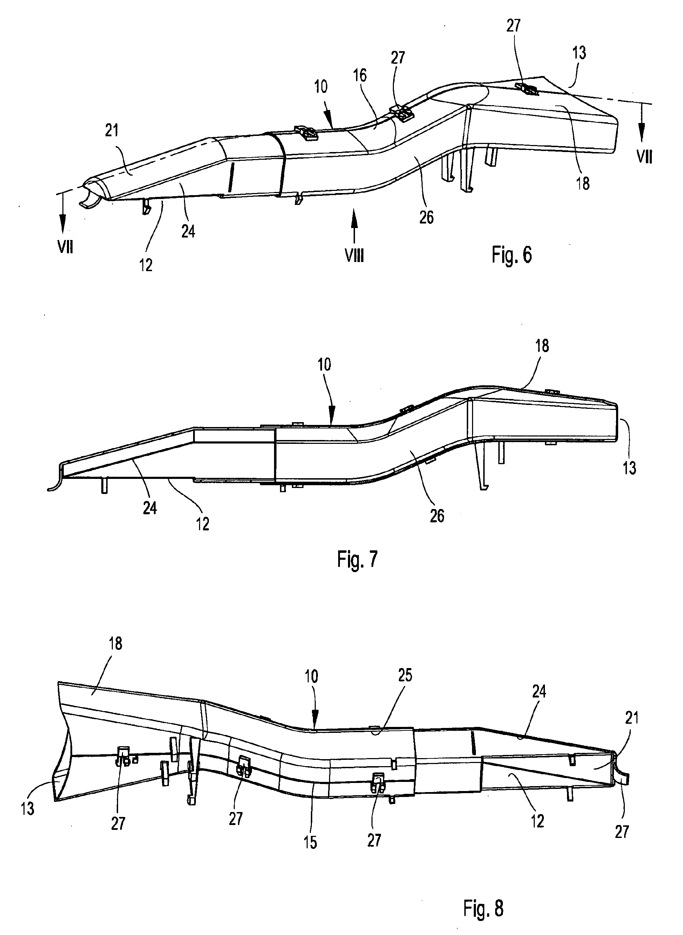

In den Fig. 6 bis 8 ist eine weitere Ausführungsform eines erfindungsgemäßen Strömungskanals 10 dargestellt. Dieser Strömungskanal 10 besteht bei diesem Ausführungsbeispiel aus drei Teilen, und zwar einem ersten Teil 24, das die Einströmöffnung 12 aufweist, und einem zweiten und dritten Teil 25, 26, die jeweils als Halbschalen ausgebildet sind und über an der Kanalfrontwand 15 und Rückwand 16 ausgebildete Rastverbindungen 27 miteinander zu einem geschlossenen Kanal zusammengefügt werden können. Vor dem Zusammenfügen der beiden Halbschalen-Teile 25, 26 wird in das der Ausströmöffnung 13 gegenüberliegende Ende das erste, die Einströmöffnung 12 aufweisende Teil 24 zwischen die Halbschalen-Teile 25, 26 eingeschoben und über eine Rastverbindung 27 in der Rückwand 16 des Strömungskanals 10 fixiert, so dass im zusammengefügten Zustand der Halbschalen-Teile 25, 26 das erste Teil 24 mit dem aus den Halbschalen-Teilen 25, 26 gebildeten Abschnitt den Strömungskanal 10 bildet. Der Einströmöffnung 12 gegenüberliegend ist die Stirnwand 21 des ersten Teils 24 in Richtung auf die Ausströmöffnung 13 über die gesamte Länge der Einströmöffnung 12 abgeschrägt, so dass im Inneren der Einströmöffnung 12 gegenüberliegend eine Schrägfläche entsteht, wodurch beim Einströmen des Mediums ein verbessertes Strömungsverhalten erreicht wird. An der Unterseite des Strömungskanals 10 sind Rastfortsätze 28 ausgebildet, mit denen der Strömungskanal 10 an der Haltestrebe 8 befestigt wird.

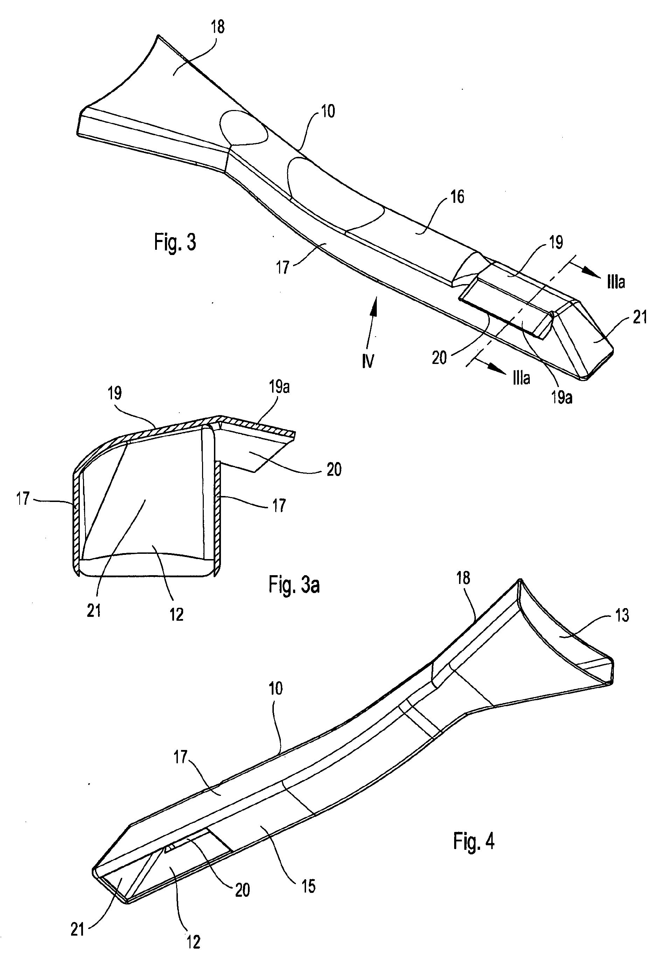

Im Übrigen ist der dargestellte Strömungskanal 10 entsprechend dem Strömungskanal 10 gemäß den Fig. 3, 3a und 4 ausgestaltet.

In Fig. 9 ist dargestellt, wie der Strömungskanal 10 gemäß den Fig. 6 bis 8 innerhalb einer Haltestrebe 8 angeordnet ist.

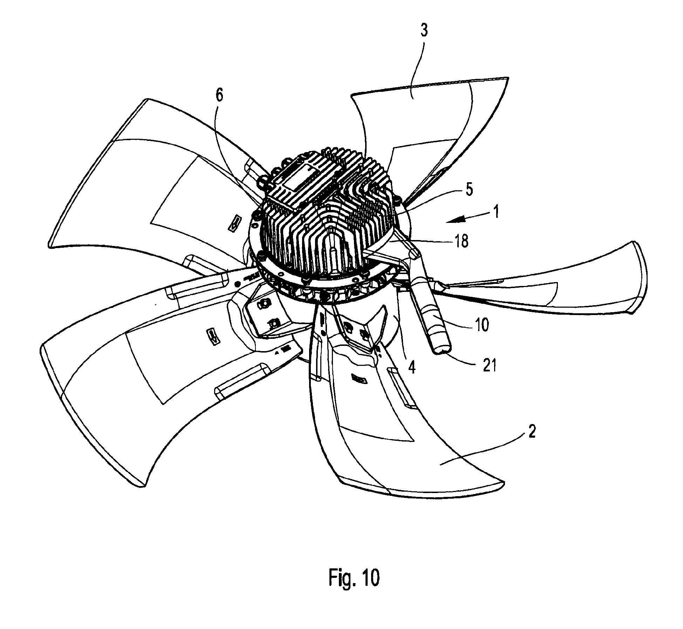

In Fig. 10 ist eine weitere Ausbildung und Anordnung eines erfindungsgemäßen Strömungskanals 10 dargestellt, wobei dieser in Fig. 10 dargestellte Strömungskanal 10 die zu den Fig. 1 bis 9 beschriebenen Merkmale einzeln oder in Kombination ebenfalls aufweisen kann. Dieser Strömungskanal 10 ist derart schräg verlaufend angeordnet und ausgebildet, dass seine Einströmöffnung 12 gegenüber seiner Ausströmöffnung 13 radial und umfangsgemäß versetzt angeordnet ist. Dieser radiale und umfangsgemäße Versatz der Ausströmöffnung 13 gegenüber der Einströmöffnung 12 kann in Drehrichtung des Lüfterrades 2 erfolgen oder aber entgegen der Drehrichtung des Lüfterrades 2. Es liegt ebenfalls im Rahmen der vorliegenden Erfindung, wenn der schräg verlaufende Strömungskanal 10 nicht wie in Fig. 10 dargestellt geradlinig verläuft, sondern bogenförmig ausgebildet ist.

Es liegt ebenfalls im Rahmen der vorliegenden Erfindung, wenn in mehreren Haltestreben 8 ein erfindungsgemäßer Strömungskanal 10 angeordnet ist oder mit den Haltestreben 8 verbunden ist. Auch können bei der Ausführungsform gemäß Fig. 5 mehrere Strömungskanäle 10 vorhanden sein.

Die Anordnung der Einströmöffnung 12 in Bezug auf die Länge L der Radschaufeln 3 ist derart, dass die Mitte der Einströmöffnung 12 einen Abstand von der Motornabe 4 besitzt, der ein Drittel der Länge L der Radschaufeln 3 beträgt. Optimal ist die Anordnung der Einströmöffnung 12 mit einem Abstand vom Umfang der Motornabe 4, der zwei Drittel der Länge L der Radschaufeln 3 beträgt. Auch hängt die Anordnung der Einströmöffnung 12 von dem gewünschten Volumenstrom ab, der durch den Strömungskanal 10 auf das Motorgehäuse 5 geleitet werden soll, wobei je weiter die Einströmöffnung 12 nach außen verlagert wird, ein größerer Volumenstrom durch den Strömungskanal 10 geleitet werden kann, da außen eine größere Umfangsgeschwindigkeit der Radschaufeln 3 gegeben ist, wodurch auch ein größerer Volumenstrom erzeugt wird. Bei einem kleineren gewünschten Volumenstrom kann die Einströmöffnung 12 nach innen wandern, wobei jedoch der Abstand der Mitte der Einströmöffnung 12 nicht kleiner sein soll als ein Drittel der Länge L der Radschaufeln 3 gemessen vom Umfang der Motornabe 4. Die erfindungsgemäße Ausgestaltung mit einem Strömungskanal 10 kann auch unabhängig von dem Vorhandensein eines Schutzgitters 22 eines Gehäuses und von Haltestreben 8 verwirklicht werden. In diesem Fall wird der Strömungskanal 10 an dem die Motorelektronik enthaltenden Motorgehäuse 5 mit Verbindungsmitteln befestigt. Durch die vorliegende Erfindung wird sichergestellt, dass auch bei zunehmendem Gegendruck eine sichere Kühlung des die Motorelektronik enthaltenden Motorgehäuses 5 erreicht wird.

**Patentansprüche**

1. Axiallüfter, bestehend aus einem innenliegenden Elektromotor (1) und einem mit diesem drehfest verbundenen Lüfterrad (2) mit mehreren vom Elektromotor (1) nach außen verlaufenden Radschaufeln (3) mit einer Schaufellänge (L) sowie insbesondere mit einem das Lüfterrad (2) umfangsgemäß umgebenden Lüftergehäuse (9), das über mindestens zwei vom Motor (1) nach außen zum Lüftergehäuse (9) verlaufenden Haltestreben (8) mit dem Motor (1) verbunden ist, wobei am Motor (1) in Strömungsrichtung (X) des Strömungsmediums hinter dem Lüfterrad (2) ein Strömungskanal (10) mit einer entgegen der Strömungsrichtung (X) ausgerichteten Einströmöffnung (12) und einer Ausströmöffnung (13) derart befestigt ist, dass die Einströmöffnung (12) gegenüber der Ausströmöffnung (13) nach außen versetzt angeordnet ist, wobei in Strömungsrichtung (X) hinter dem Lüfterrad (2) am Motor (1) ein Motorgehäuse (5) zur Aufnahme einer Motorelektronik ausgebildet ist, und wobei die Ausströmöffnung (13) in Richtung auf das Motorgehäuse (5) derart ausgerichtet ist, dass ein aus der Ausströmöffnung (13) austretender Luftstrom auf das Motorgehäuse (5) geleitet wird und die Ausströmöffnung (13) einen Öffnungsspalt bildet, der sich über einem Teilumfang des Motorgehäuses (5) erstreckt und die Mitte der Einströmöffnung (12) mindestens in einem radialen Abstand vom Umfang einer Motornabe (4) liegt, der ein Drittel bis zwei Drittel der Schaufellänge (L) beträgt, wobei gilt L = (D1-D2)/2 und D2 der Außendurchmesser der Motornabe (4) und D1 der Durchmesser des Umkreises um ein radial äußeres Ende der Radschaufeln (3) ist.

2. Axiallüfter nach Anspruch 1,
   **dadurch gekennzeichnet, dass** der Strömungskanal (10) in radialer Richtung geradlinig verläuft.

3. Axiallüfter nach Anspruch 1,
   **dadurch gekennzeichnet, dass** der Strömungskanal (10) derart schräg oder bogenförmig ausgebildet und angeordnet ist, dass die Einströmöffnung (12) gegenüber der Ausströmöffnung (13) radial und umfangsgemäß versetzt angeordnet ist.

4. Axiallüfter nach einem der Ansprüche 1 bis 3,
   **dadurch gekennzeichnet, dass** der Strömungskanal (10) rohrförmig ausgebildet ist.

5. Axiallüfter nach einem der Ansprüche 1 bis 4,
   **dadurch gekennzeichnet, dass** der Strömungskanal (10) als Zusatzbauteil am Motorgehäuse (5) befestigt ist.

6. Axiallüfter nach einem der Ansprüche 1 bis 5,
   **dadurch gekennzeichnet, dass** der Strömungskanal (10) als Zusatzbauteil in der Haltestrebe (8) angeordnet oder in der Haltestrebe (8) einstückig integriert ist.

7. Axiallüfter nach einem der Ansprüche 1 bis 6,
   **dadurch gekennzeichnet, dass** der Strömungskanal (10) an einer Haltestrebe (8) durch Anbinden oder durch eine Formschlussverbindung, insbesondere durch Einclipsen befestigt ist.

8. Axiallüfter nach einem der Ansprüche 1 bis 7, **dadurch gekennzeichnet, dass** die Ausströmöffnung (13) unmittelbar über dem Motorgehäuse (5) angeordnet ist.

9. Axiallüfter nach einem der Ansprüche 1 bis 8, **dadurch gekennzeichnet, dass** zwischen dem Lüfterrad (2) und den Haltestreben (8) ein Schutzgitter (22) angeordnet ist.

10. Axiallüfter nach einem der Ansprüche 5 bis 9, **dadurch gekennzeichnet, dass** der als Zusatzbauteil ausgebildete Strömungskanal (10) im Querschnitt rechteckig ist und eine Frontwand (15), eine Rückwand (16) und zwei diese verbindende Seitenwände (17) besitzt.

11. Axiallüfter nach einem der Ansprüche 5 bis 10, **dadurch gekennzeichnet, dass** die Ausströmöffnung (13) in einem sich zur Ausströmöffnung (13) erweiternden Ausström-Trichterabschnitt (18) ausgebildet ist, der gegenüber dem übrigen Abschnitt des Strömungskanals (10) derart durch eine Abkröpfung versetzt ist, dass er im in der Haltestrebe (8) eingesteckten Zustand oberhalb bzw. außerhalb der Haltestrebe (8) angeordnet ist.

12. Axiallüfter nach einem der Ansprüche 10 oder 11, **dadurch gekennzeichnet, dass** im Bereich der Einströmöffnung (12) die Rückwand (16) derart ausgestaltet ist, dass ein Rückwandabschnitt (19), zusammen mit der einen Seitenwand (17) eine Zusatzöffnung (20) ausbildet, die auf der Seite des Strömungskanals (10) angeordnet ist, die bei Drehung der Radschaufeln (3) von den Schaufelvorderkanten zuerst überstrichen wird.

13. Axiallüfter nach einem der Ansprüche 1 bis 12, **dadurch gekennzeichnet, dass** der Strömungskanal (10) eine endseitige Stirnwand (21) besitzt, die abgeschrägt in Richtung auf das gegenüberliegende Ende ausgebildet ist, so dass sich eine innere schräge Anströmfläche ausbildet.

14. Axiallüfter nach einem der Ansprüche 10 bis 13, **dadurch gekennzeichnet, dass** der Strömungskanal (10) aus drei Teilen, und zwar einem ersten Teil (24), das die Einströmöffnung (12) aufweist, und einem zweiten und dritten Teil (25, 26) gebildet ist, die jeweils als Halbschalen ausgebildet sind und über an der Frontwand (15) und der Rückwand (16) ausgebildete Rastverbindungen (27) miteinander zu einem geschlossenen Kanal zusammengefügt sind.

15. Axiallüfter nach Anspruch 14,

**dadurch gekennzeichnet, dass** das die Einströmöffnung (12) aufweisende Teil (24) zwischen den Halbschalen-Teilen (25, 26) eingeschoben und über eine Rastverbindung (27) in der Rückwand (16) des Strömungskanals (10) fixiert ist.

16. Axiallüfter nach Anspruch 15, **dadurch gekennzeichnet, dass** der Rückwandabschnitt (19) oberhalb der Zusatzöffnung (20) einen Verlängerungsabschnitt (19a) aufweist, der zur Umleitung der durch den Axiallüfter strömenden Luft in die Zusatzöffnung (20) dient.

**Claims**

1. An axial fan, consisting of an internal electric motor (1) and a fan wheel (2), connected to the latter so as to be fastened against relative rotation, with a plurality of wheel blades (3), running outwards from the electric motor (1), with a blade length (L) as well as in particular with a fan housing (9), circumferentially surrounding the fan wheel (2), connected to the motor (1) via at least two holding struts (8) running outwards to the fan housing (9) from the motor (1), wherein a flow channel (10) with an inlet (12) directed against the flow direction (X) and an outlet (13) is, after the fan wheel (2) in the flow direction (X) of the flow medium, secured to the motor (1) in such a manner that the inlet (12) is arranged offset outwards with respect to the outlet (13), wherein, after the fan wheel (2) in the flow direction (X), a motor housing (5) to receive motor electronics is formed on the motor (1), and wherein the outlet (13) is directed towards the motor housing (5) in such a manner that an air stream issuing from the outlet (13) is guided onto the motor housing (5) and the outlet (13) forms an opening gap which extends over a partial circumference of the motor housing (5) and the centre of the inlet (12) lies at least at a radial distance from the circumference of a motor hub (4) amounting to a third to two thirds of the blade length (L), wherein L = (D1-D2)/2 and D2 is the external diameter of the motor hub (4) and D1 is the diameter of the perimeter about a radially outer end of the wheel blades (3).

2. An axial fan according to claim 1, **characterised in that** the flow channel (10) runs rectilinearly in a radial direction.

3. An axial fan according to claim 1, **characterised in that** the flow channel (10) is formed and arranged in an inclined or curved manner in such a manner that the inlet (12) is arranged radially and circumferentially offset with respect to the outlet (13).

4. An axial fan according to any one of claims 1 to 3, **characterised in that** the flow channel (10) is tubular.

5. An axial fan according to any one of claims 1 to 4, **characterised in that** the flow channel (10) is secured to the motor housing (5) as an additional component.

6. An axial fan according to any one of claims 1 to 5, **characterised in that** the flow channel (10) is arranged in the holding strut (8) as an additional component or is integrally integrated in the holding strut (8).

7. An axial fan according to any one of claims 1 to 6, **characterised in that** the flow channel (10) is secured to a holding strut (8) by binding or by a form lock connection, in particular by clipping in.

8. An axial fan according to any one of claims 1 to 7, **characterised in that** the outlet (13) is arranged directly above the motor housing (5).

9. An axial fan according to any one of claims 1 to 8, **characterised in that** a protective grille (22) is arranged between the fan wheel (2) and the holding struts (8).

10. An axial fan according to any one of claims 5 to 9, **characterised in that** the flow channel (10) in the form of an additional component is rectangular in cross-section and has a front wall (15), a rear wall (16) and two lateral walls (17) connecting these.

11. An axial fan according to any one of claims 5 to 10, **characterised in that** the outlet (13) is formed in an outflow funnel portion (18), widening towards the outlet (13), which with respect to the remaining portion of the flow channel (10) is offset by an angular bend in such a manner that in the state inserted in the holding strut (8) it is arranged above or outside of the holding strut (8).

12. An axial fan according to any one of claims 10 and 11, **characterised in that** in the region of the inlet (12), the rear wall (16) is formed in such a manner that a rear wall portion (19) together with one lateral wall (17) forms an additional opening (20) which is arranged on the side of the flow channel (10) swept first by the blade front edges upon rotation of the wheel blades (3).

13. An axial fan according to any one of claims 1 to 12, **characterized in that** the flow channel (10) has an end front wall (21) which slopes in the direction of the opposite end, so that there forms an inner, oblique flow surface.

14. An axial fan according to any one of claims 10 to 13, **characterised in that** the flow channel (10) is formed from three parts, namely a first part (24), having the inlet (12), and a second and third part (25, 26), in each case formed as half shells and joined together to form a closed channel via locking connections (27) formed on the front wall (15) and the rear wall (16).

15. An axial fan according to claim 14, **characterised in that** the part (24) having the inlet (12) is pushed in between the half-shell parts (25, 26) and is fixed in the rear wall (16) of the flow channel (10) via a locking connection (27).

16. An axial fan according to claim 15, **characterised in that** the rear wall portion (19) has a lengthening portion (19a) above the additional opening (20), which lengthening portion (19a) serves to divert into the additional opening (20) the air flowing through the axial fan.

**Revendications**

1. Ventilateur axial, constitué d'un moteur électrique (1) se trouvant à l'intérieur et d'une roue de ventilateur (2) reliée à ce dernier de manière solidaire en rotation, pourvue de plusieurs aubes (3) s'étendant vers l'extérieur depuis le moteur électrique (1) et présentant une longueur d'aube (L), ainsi qu'en particulier d'un boîtier de ventilateur (9) entourant sur la périphérie la roue de ventilateur (2), lequel boîtier de ventilateur est relié, par l'intermédiaire au moins de deux montants de retenue (8) s'étendant depuis le moteur (1) vers l'extérieur en direction du boîtier de ventilateur (9), au moteur (1), dans lequel un canal d'écoulement (10) pourvu d'un orifice d'admission (12) orienté dans le sens opposé au sens d'écoulement (X) et d'un orifice d'évacuation (13) est fixé derrière la roue de ventilateur (2), au niveau du moteur (1) dans le sens d'écoulement (X) du milieu d'écoulement de telle manière que l'orifice d'admission (12) est disposé de manière décalée vers l'extérieur par rapport à l'orifice d'évacuation (13), sachant qu'un carter de moteur (5) servant à recevoir un système électronique de moteur est réalisé dans le sens d'écoulement (X) derrière la roue de ventilateur (2) au niveau du moteur (1), et sachant que l'orifice d'évacuation (13) est orienté en direction du carter de moteur (5) de telle manière qu'un flux d'air sortant de l'orifice d'évacuation (13) est guidé sur le carter de moteur (5) et que l'orifice d'évacuation (13) forme une fente d'orifice, qui s'étend sur une périphérie partielle du carter de moteur (5), et que le centre de l'orifice d'admission (12) se trouve au moins à une distance radiale de la périphérie d'un moyeu de moteur (4), laquelle distance représente entre un tiers et deux tiers de la longueur d'aube (L), dans lequel s'applique L = (D1-D2)/2 et que D2 est le diamètre extérieur du moyeu de moteur (4) et que D1 est le diamètre du périmètre autour d'une extrémité radialement extérieure des aubes (3).

2. Ventilateur axial selon la revendication 1, **caractérisé en ce que** le canal d'écoulement (10) s'étend de manière rectiligne dans une direction radiale.

3. Ventilateur axial selon la revendication 1, **caractérisé en ce que** le canal d'écoulement (10) est réalisé et disposé de manière oblique ou de manière à présenter une forme d'arc de telle manière que l'orifice d'admission (12) est disposé de manière décalée radialement et selon la périphérie par rapport à l'orifice d'évacuation (13).

4. Ventilateur axial selon l'une quelconque des revendications 1 à 3, **caractérisé en ce que** le canal d'écoulement (10) est réalisé de manière à présenter une forme tubulaire.

5. Ventilateur axial selon l'une quelconque des revendications 1 à 4, **caractérisé en ce que** le canal d'écoulement (10) est fixé au niveau du carter de moteur (5) en tant que composant supplémentaire.

6. Ventilateur axial selon l'une quelconque des revendications 1 à 5, **caractérisé en ce que** le canal d'écoulement (10) est disposé dans le montant de retenue (8) comme composant supplémentaire ou est intégré d'un seul tenant dans le montant de retenue (8).

7. Ventilateur axial selon l'une quelconque des revendications 1 à 6, **caractérisé en ce que** le canal d'écoulement (10) est fixé au niveau d'un montant de retenue (8) par liaison ou par un assemblage par complémentarité de forme, en particulier par clipsage.

8. Ventilateur axial selon l'une quelconque des revendications 1 à 7, **caractérisé en ce que** l'orifice d'évacuation (13) est disposé directement au-dessus du carter de moteur (5).

9. Ventilateur axial selon l'une quelconque des revendications 1 à 8, **caractérisé en ce qu'**une grille de protection (22) est disposée entre la roue de ventilateur (2) et les montants de retenue (8).

10. Ventilateur axial selon l'une quelconque des revendications 5 à 9,

**caractérisé en ce que** le canal d'écoulement (10) réalisé sous la forme d'un composant supplémentaire est rectangulaire dans la section transversale et comporte une paroi avant (15), une paroi arrière (16) et deux parois latérales (17) reliant ces dernières.

11. Ventilateur axial selon l'une quelconque des revendications 5 à 10,

**caractérisé en ce que** l'orifice d'évacuation (13) est réalisé dans une section d'évacuation en forme d'entonnoir (18) s'élargissant en direction de l'orifice d'évacuation (13), laquelle section est décalée par rapport au reste de la section du canal d'écoulement (10) par une partie coudée de telle manière qu'elle est disposée, dans l'état emboîté dans le montant de retenue (8), au-dessus ou à l'extérieur du montant de retenue (8).

12. Ventilateur axial selon l'une quelconque des revendications 10 ou 11,

**caractérisé en ce que** la paroi arrière (16) est réalisée de telle manière dans la zone de l'orifice d'admission (12) qu'une section de paroi arrière (19), forme conjointement avec une des parois latérales (17) un orifice supplémentaire (20) qui est disposé sur le côté du canal d'écoulement (10) balayé en premier lieu par les arêtes avant d'aube lors de la rotation des aubes (3).

13. Ventilateur axial selon l'une quelconque des revendications 1 à 12,

**caractérisé en ce que** le canal d'écoulement (10) comporte une paroi frontale (21) côté extrémité qui est réalisée de manière chanfreinée en direction de l'extrémité opposée de sorte que se forme une surface d'arrivée de flux intérieure oblique.

14. Ventilateur axial selon l'une quelconque des revendications 10 à 13,

**caractérisé en ce que** le canal d'écoulement (10) est formé à partir de trois parties, à savoir à partir d'une première partie (24), qui présente l'orifice d'admission (12), et d'une deuxième partie et d'une troisième partie (25, 26) qui sont réalisées respectivement sous la forme de demi-coques et sont rassemblées l'une à l'autre par l'intermédiaire d'assemblages par encliquetage (27) réalisés au niveau de la paroi avant (15) et de la paroi arrière (16) pour former un canal fermé.

15. Ventilateur axial selon la revendication 14, **caractérisé en ce que** la partie (24) présentant l'orifice d'admission (12) est enfilée entre les parties de demi-coques (25, 26) et est fixée dans la paroi arrière (16) du canal d'écoulement (10) par l'intermédiaire d'un assemblage par encliquetage (27).

**16.** Ventilateur axial selon la revendication 15, **caractérisé en ce que** la section de paroi arrière (19) présente au-dessus de l'orifice supplémentaire (20) une section de prolongement (19a) qui sert à dévier dans l'orifice supplémentaire (20) l'air circulant à travers le ventilateur axial.

Fig. 1

Fig. 2

Fig. 3

Fig. 3a

Fig. 4

Fig. 5

Fig. 6

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0992692 A1